# EUROPÄISCHE PATENTSCHRIFT

(11) **EP 0 535 000 B1**
(45) Veröffentlichungstag und Bekanntmachung des Hinweises auf die Patenterteilung: **02.03.1994**
(21) Anmeldenummer: 91909652.9
(22) Anmeldetag: 27.05.1991
(51) Int. Cl.: E04C 2/04, E04C 2/06, B28B 23/00, B28B 19/00

(54) **LEHMBAUPLATTE UND VERFAHREN ZU IHRER HERSTELLUNG**
CLAY TILE AND PROCESS FOR MANUFACTURING IT
PANNEAU DE CONSTRUCTION EN PISE ET PROCEDE POUR SA FABRICATION

(30) Priorität: 26.05.1990 DE 4017057
(43) Veröffentlichungstag der Anmeldung: 07.04.1993
(73) Patentinhaber: Breidenbach, Peter, D-41751 Viersen (DE)
(72) Erfinder: Breidenbach, Peter, D-41751 Viersen (DE)
(74) Vertreter: Bauer, Wulf, Dr.
(86) Internationale Anmeldenummer: DE9100441
(87) Internationale Veröffentlichungsnummer: WO9119058

(56) Entgegenhaltungen:
- EP-A- 0 128 681
- EP-A- 0 258 734
- WO-A-87/04976
- CH-A- 163 458
- DE-A- 1 813 733
- FR-A- 1 148 143
- FR-A- 1 534 389
- FR-A- 2 298 658
- FR-A- 2 580 627
- GB-A- 2 016 367
- GB-A- 2 225 599
- US-A- 1 604 236
- MODERN PLASTICS, vol. 42, 6th February 1965, Lausanne, CH, page 46; "LIGHTWEIGHT BUILDING PANEL MADE OF PHENOLIC AND FOAMED CLAY"

## Beschreibung

Die Erfindung bezieht sich auf eine Lehmbauplatte bestehend aus einer lehmgebundenen Kernschicht und beidseitig jeweils einer oberflächlichen Lage, sowie auf ein Verfahren zur Herstellung einer derartigen Lehmbauplatte.

Der Baustoff Lehm hat gegenüber konventionellen, industrialisierten Baustoffen entscheidende Vorteile, er hat die Fähigkeit, die Luftfeuchtigkeit in Räumen zu regulieren und damit ein gesundes Wohnklima zu schaffen. Gegenüber industrialisierten Baustoffen ist jedoch im allgemeinen der Arbeitseinsatz bei der Verwendung von Lehmbaustoffen größer. Ein entscheidender Vorteil der Lehmbauweise, nämlich kostengünstige Ausgangsstoffe, wird durch den höheren Zeitaufwand bei der Verarbeitung wieder aufgezehrt. Um dem gegenzuwirken, ist bereits versucht worden, möglichst viele Tätigkeiten von der Baustelle weg zu einer industriellen oder halbindustriellen Vorfertigung zu verlagern.

Aus der EP-A-128 681 ist eine Lehmbauplatte der eingangs genannten Art bekannt. Ihre lehmgebundene Kernschicht enthält expandierbare Mineralien und eine Armierung in Form von Fasern. Die Kernschicht ist beidseitig jeweils durch eine oberflächliche Lage aus Papier abgedeckt.

Auf derartige Fertigteile in plattenartiger Ausführung und unter Verwendung von Lehm als Bindemittel bezieht sich die Erfindung. Der Begriff "Lehmbauplatte" wird als Lehmfertigteil in Plattenform verstanden. Als Lehm kommt insbesondere Leichtlehm in Frage, und hier insbesondere Strohleichtlehm oder Lehm mit porösen mineralischen Zuschlagstoffen. Unter Platten werden im Sinne der Erfindung Körper mit im wesentlichen ebenen Hauptflächen verstanden, deren Abmessungen in Länge und Breite im wesentlichen beliebig ist, jedenfalls mehrere Meter betragen kann. Die Dicke kann zwischen wenigen Zentimetern und einigen Dezimetern variieren.

Aus der WO 87/04976 ist eine zementgebundene Baustoffplatte bekannt, die durch ein Netz aus Glasfasern, das oberflächennah eingebettet ist, armiert ist. Die DE-A-18 13 733 bezieht sich auf eine sehr allgemein beschriebene hydraulisch gebundene Bauplatte, die durch ein netzförmiges Material aus Kunststoff bewehrt ist, das entweder vollständig oberflächennah eingebettet ist oder nur oberflächlich aufliegt. Die US-A-16 04 236 beschreibt eine zementgebundene Baustoffplatte in die auf einer Hauptfläche oberflächennah ein Netz eingebettet ist. Es soll verhindern, daß beim Herstellungsvorgang gröbere Faserbestandteile des noch plastischen Kernmaterials an den pressenden Rollen anhaften können.

Der Erfindung liegt die Aufgabe zugrunde, eine Lehmbauplatte der eingangs genannten Art sowie ein Verfahren zu ihrer Herstellung anzugeben. Die Lehmbauplatte soll in beliebigen Abmessungen industriell herstellbar sein, sie soll stabil, problemlos handhabbar sein, insbesondere transportiert und geschnitten werden können, und eine ausreichend feste Oberfläche aufweisen.

Gelöst wird die Aufgabe durch eine Lehmbauplatte mit den Merkmalen des Anspruchs 1 und hiervon ausgehend durch ein Verfahren nach dem Patentanspruch 9.

Derartige Lehmbauplatten lassen sich industriell in beliebiger Größe fertigen. Aufgrund der beidseitigen oberflächlichen Lage haben sie eine ausgezeichnete Festigkeit. Sie können auf die jeweils benötige Größe mit einfachen Mitteln, z. B. einem Fuchsschwanz oder einer Motorsäge, zugeschnitten werden. Die Verbindung zwischen dem netzähnlichen Material und dem Lehm der Kernschicht erfolgt durch das oberflächliche Einbetten des textilen Materials in den Lehm der Kernschicht. Hierdurch wird ein Formschluß erreicht. Besondere, zusätzliche Bindemittel sind nicht erforderlich. Die Einbettung erfolgt lediglich nur so tief, daß die netzartige Struktur des textilen Materials die Oberfläche der Lehmbauplatte bestimmt, also von außen unmittelbar erkennbar ist. Durch die oberflächlich sichtbare textile Lage hat die Lehmbauplatte eine im wesentlichen regelmäßige, reliefartige Struktur und kann, beispielsweise beim Einsatz für Innenwände, unmittelbar gestrichen werden, ohne daß es eines Verputzens oder des Aufklebens einer Tapete bedarf. Hierin liegt eine deutliche Vereinfachung in der Verarbeitung.

Die Lehmbauplatte wird aus naturbelassenen Materialien hergestellt. Als textiles Material kommen insbesondere Gewebe in Frage, und zwar grobe Gewebe aus Flachs, Baumwolle und ähnlichen, natürlich wachsenden Fasern. Die Struktur der textilen Lage muß netzartig sein, damit sie beim Herstellen der Lehmbauplatte vom nassen Lehm umgeben werden kann, also in den nassen Lehm zumindest teilsweise eingedrückt werden kann. Bei diesem Vorgang umschließt der Lehm zumindest stellenweise die Fäden des textilen Materials, wodurch dieses mit dem Lehm innig verbunden ist. Um diesen Umschluß zu ermöglichen, besteht die Oberfläche der Kernschicht im wesentlichen aus Lehm, so daß kein Hindernis besteht, das textile Material in den feuchten Lehm einzudrücken und damit einzubetten.

Die Kernschicht wird durch natürlich nachwachsende Materialien armiert und gegebenenfalls durch diese thermisch besser isolierend ausgeführt. Als Armierung kommt Stroh in längeren oder kurzen Fasern, Kokos, Sisal, Hanf, Flachs und dergleichen in Frage. Weiterhin haben sich Schilfrohrmatten besonders bewährt. Sie bewirken einerseits eine Armierung, andererseits eine Wärmedämmung.

In einer besonders bevorzugten Ausbildung erstreckt sich zumindest bereichsweise die Lehmschicht kontinuierlich von der einen zur anderen Oberfläche der Lehmbauplatte. Anders ausgedrückt ist die Lehmschicht nicht durch irgendwelche Zwischenlagen unterbrochen. In diesem Fall bleibt die Kapillarität erhalten, die Lehmbauplatte läßt Wasser durch. Wenn andererseits, beispielsweise durch eine Lage sehr eng und ohne Zwischenabstand nebeneinanderliegender Schilfrohre in der Kernschicht, die Lehmschichten der Kernschicht voneinander getrennt sind, ist keine Kapillarität mehr gegeben. Dies kann für Zwecke eingesetzt werden, in denen ein Wasserdurchlaß nicht erwünscht ist.

Der Durchmesser seiner Fäden ist um den Faktor fünf kleiner als der Freiraum zwischen zwei benachbarten Fäden. Vorzugsweise ist der Freiraum mindestens um den Faktor zehn größer als der Durchmesser der Fäden.

Die Fäden des textilen Materials sollen so ausreichend reißfest sein, daß sie der Lehmbauplatte die für die Verarbeitung und den Einsatz im Gebäude notwendige Festigkeit geben. Als ausreichend haben sich normale, handelsübliche Jute-Gewebe erwiesen, beispielsweise das Produkt H 155 der Firma Biederlack.

Für die verfahrensmäßige Herstellung der Baustoffplatte ist es besonders vorteilhaft, wenn der Lehm pumpfähig ist. In diesem Fall kann die Herstellung der Bauplatten mit einfachen Mitteln automatisiert werden. Grundsätslich lassen sich aber auch Lehmbauplatten aus Lehmmischungen erstellen, die selbst nicht pumpfähig sind, weil sie beispielsweise mit Stroh vermischt sind oder dergleichen. Als Material der Kernschicht kommt insbesondere Leichtlehm in Frage, z.B. Strohleichtlehm oder Lehm mit porösen mineralischen Zuschlagstoffen, wie beispielsweise Blähton, -glas, -lava, -perlite oder Bims.

Weitere Vorteile und Merkmale der Erfindung ergeben sich aus den übrigen Ansprüchen sowie aus der nun folgenden Beschreibung mehrerer, vorzugsweise Ausführungsbeispiele, die unter Bezugnahme auf die Zeichnung im folgenden näher erläutert werden. In dieser zeigen:
- Fig. 1: eine perspektivische Darstellung eines herausgeschnittenen Stückes einer Lehmbauplatte,
- Fig. 2: eine Darstellung entsprechend Fig. 1, jedoch für eine andere Ausführung der Lehmbauplatte,
- Fig. 3: eine Draufsicht auf einen Teilbereich einer Oberfläche einer Lehmbauplatte entsprechend Fig. 1 oder Fig. 2 und
- Fig. 4: eine schematische Darstellung einer Vorrichtung zum Herstellen einer Lehmbauplatte ähnlich Fig. 2, in schematisch dargestellter Seitenansicht.

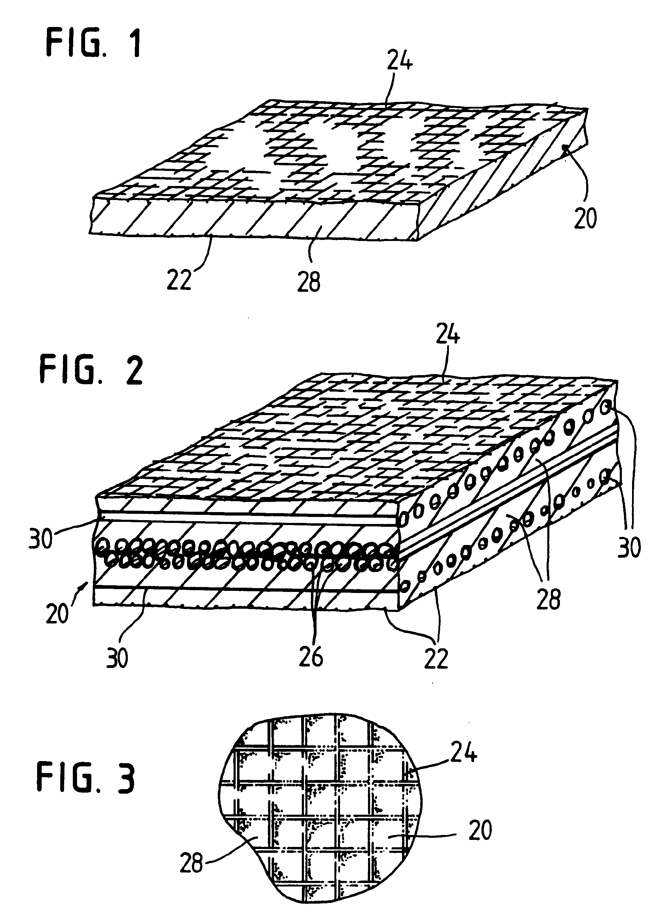

Fig. 1 zeigt die Lehmbauplatte in ihrer einfachsten Form. Sie besteht aus einer Kernschicht 20, die in diesem Fall ausschließlich aus Lehm besteht, und in die beiden Oberflächen dieser Kernschicht 20 eingebetteten Lagen 22, 24 aus einem netzähnlichen, reißfesten, textilen Material. Die Dicke der Platte liegt bei 16 mm, sie wird ähnlich verarbeitet wie Gipskartonplatten.

Fig. 2 zeigt demgegenüber eine dickere Lehmbauplatte, sie hat eine Dicke von ca. 40 mm. Bei ihr ist in die Kernschicht 20 mittig eine geschlossene Lage 26 aus Schilfrohren eingebettet, die Lage ist ca. zwei Schilfrohre dick, die Schilfrohre liegen so eng aneinander, daß das Lehmmaterial 28 beidseits dieser Lage 26 keine Verbindung miteinander hat. Dadurch ist im Gegensatz zum Ausführungsbeispiel nach Fig. 1 die Kapillarität der Lehmbauplatte durch die Lage 26 unterbrochen. Der Lehm 28 ist durch Naturfasern armiert. Zwischen der mittigen Lage 26 und den beiden Oberflächen der Lehmbauplatte befindet sich noch jeweils eine Lage 30 aus jeweils im Abstand voneinander angeordneten Schilfrohren, diese Lage 30 hat die Dicke eines Schilfrohres. Hier sind also die einzelnen Schilfrohre vollständig in Lehm 28 eingebettet, so daß die beiden Lagen 30 die Kapillarität nicht unterbrechen. Die beiden Lagen 30 laufen quer zur Lage 24.

Fig. 3 zeigt, wie die textile Lage 22 in die Oberfläche der Lehmbauplatte eingebettet ist. Erst durch dieses Einbetten wird der Verbund zwischen textiler Lage 22 und Kernschicht 20 erreicht. Dabei vermittelt die textile Lage 22 der Lehmbauplatte ihre Zugfestigkeit, während die Druckfestigkeit durch den Lehmwerkstoff erhalten wird. Fig. 3 zeigt, daß zumindest etwa ein Drittel aller Fäden der Lage 22 vollständig von Lehm umhüllt sind, auch wenn sich nur eine hauchdünne Lage Lehm über ihnen befindet.

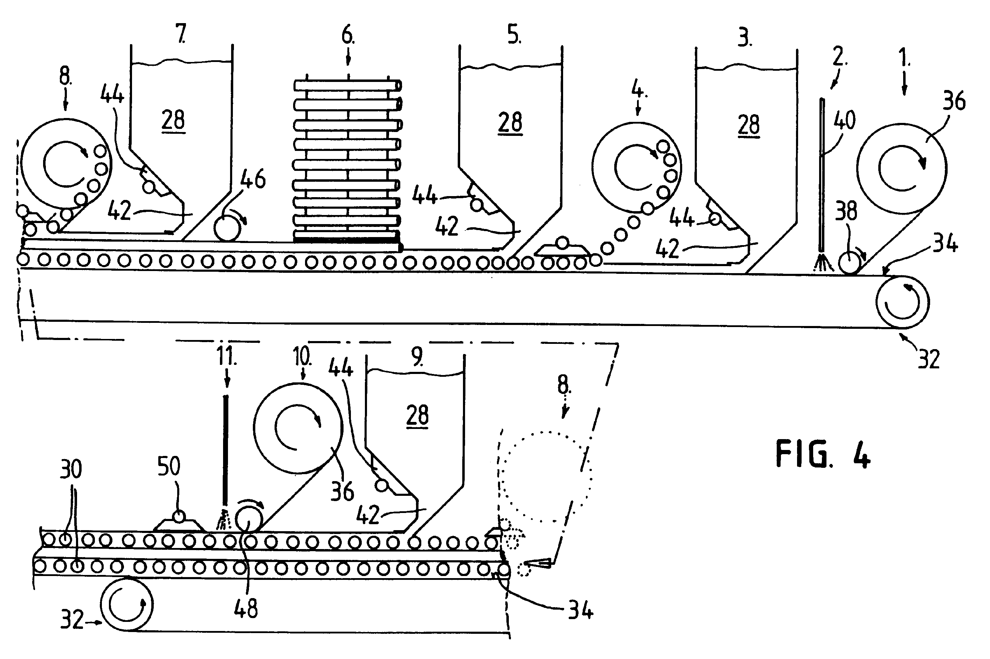

Fig. 4 zeigt eine Möglichkeit für die verfahrensmäßige Herstellung einer beispielsweise zwei Meter breiten Lehmbauplatte beliebiger Länge. Die Herstellung der Lehmbauplatte erfolgt schrittweise bzw. schichtweise und auf einem Förderband 32 ausreichender Breite, nämlich auf dessen Obertrum 34, der so unterstützt ist, daß er eben und im gezeigten Ausführungsbeispiel (aber nicht notwendigerweise) waagerecht ist. Die Förderrichtung geht in der Darstellung von rechts nach links, dies ist auch durch Pfeile an der Umlenk- bzw. Antriebsrolle des Förderbandes 32 angegeben.

In einer ersten Station wird von einem Ballen 36 ein Jute-Gewebe H 155 abgezogen, der Drehpfeil zeigt die Abzugsrichtung. Durch eine Walze 38, die gegen den Obertrum 34 gedrückt wird, erfolgt der Abzug, der Trum nommt die Walze 38, die aber auch selbst angetrieben sein kann, mit. Durch die Walze wird das Jutegewebe zusätzlich auf die Oberfläche des Obertrums 34 gedrückt. Das Jutegewebe bildet die Lage 22 im Endprodukt. Das Jutegewebe wird in einer unmittelbar nachgeschalteten Station 40 über die gesamte Breite mit Wasser benetzt, im gezeigten Ausführungsbeispiel wird Wasser aufgesprüht. Diese Station ist nicht unbedingt notwendig, aufgrund der Benetzung der Jute wird aber ein besserer Verbund mit dem Lehm erzielt.

In einer dritten Station wird ein Lehm-Fasergemisch, das plastisch ist, mittels eines länglichen, keilförmigen Trichrters 42 auf die Lage 22 gegeben. Der Auftrag wird durch einen Vibrator 44 unterstützt. An seiner Stelle oder ergänzend kann auch im Trichter 42 eine geeignete Förderwalze, beispielsweise Zahnwalze, vorgesehen sein. Der Trichter 42 verläuft leicht schräg, in Förderrichtung des Förderbandes 32, oben schließt sich an ihn ein Aufnahmeraum für plastisches Lehm-Fasergemisch an. Dieser Aufnahmeraum wird kontinuierlich oder diskontinuierlich mit einsatzbereitem Lehm-Fasergemisch gefüllt, die Zubereitung kann unmittelbar oberhalb erfolgen.

Auf dem Obertrum 34 befindet sich nun die Lage 22 aus textilem Material und eine Schicht gleichmäßiger Dicke aus dem Lehm-Fasergemisch. Aufgrund ihres Gewichtes drückt sich diese Schicht in die textile Lage 22 und umschließt zumindest teilweise deren Fäden.

In einer vierten Station wird eine einlagige Schilfrohrmatte aus beispielsweise siebzigstengligem Schilfrohr auf die Lehmschicht aufgebracht. Die Abzugsrichtung ist dargestellt. Wie aus der Figur ersichtlich ist, befinden sich die Schilfrohre im Abstand voneinander, so daß sie im fertigen Produkt einzeln von Lehm umhüllt sind. Wie die Figur zeigt, verläuft die Stengelrichtung quer zur Förderrichtung des Förderbandes 32. Die Schilfrohrlage wird durch einen nachgeschalteten Vibrator 44 in die Lehmschicht eingerückt, zugleich erfolgt hierdurch ein Verdichten des Materials.

In einer fünften Station, die identisch mit der dritten Station ausgebildet ist, wird wiederum ein Lehm-Fasergemisch in plasticher Form aufgetragen, es erfolt dies wiederum in einer Schicht gleicher Dicke. Die Bezugszeichen sind wie bei der dritten Station gewählt.

Hinter der fünften Station ist also auf das Schilfroht, das im fertigen Produkt die Lage 30 bildet, eine Schicht Lehm-Faser-Gemisch aufgetragen, wodurch die Voraussetzung gegeben ist, daß jeder einzelne Stengel des Schilfrohres vollständig in Lehm eingebettet werden kann.

In einer siebten Station wird auf die so erreichte Anordnung wiederum Schilfrohr aufgelegt, diesmal jedoch verläuft die Stengelrichtung parallel zur Richtung des Förderbandes 32. In diesem Fall kann also nicht mehr kontinuierlich gearbeitet werden, vielmehr werden zwei Meter lange Lagen des wiederum siebzigstengligen Schilfrohres jeweils abgeschnitten und nebeneinander, vorzugsweise mit geringfügiger Überlappung in Richtung des Förderbandes 32, auf die Lehmschicht der fünften Station aufgelegt.

Durch einen Vibrator in Form einer vibrierenden Rolle 46, die sich in Richtung des zugehörigen Pfeiles dreht, wird das Schilfrohr in die Oberfläche des Lehmbreis eingedrückt, zugleich findet eine Verdichtung statt.

In einer siebten Station, die wiederum mit der dritten baugleich ist, wird wiederum eine Lage aus plastischem Lehm-Faser-Gemisch aufgebracht, es wird auf die Ausführungen zur dritten Station verwiesen.

In einer achten Station, die baugleich mit der vierten ist, wird wiederum siebzigstengliges Schilfrohr aufgelegt, Stengelrichtung quer zur Richtung des Förderbandes 32. Da gleiche Bauteile benutzt werden, werden auch gleiche Bezugsziffern verwandt. In der fertigen Lehmbauplatte bildet die so aufgebracht Lage an Schilfrohr die Lage 30.

In einer neunten Station, die baugleich mit der Dritten ist, wird wiederum eine Schicht aus plastischem Lehm-Faser-Gemisch auf die so erreichte Schichtanordnung aufgetragen. Da gleiche Bauteile verwendet werden, werden auch gleiche Bezugszeichen benutzt.

In einer zehnten und elften Station, die baugleich mit der ersten und zweiten sind, wird aus einem Ballen Jute H 155 in Gewebeform abgezogen und mittels einer Abzugswalze 48, im gezeigten Ausführungsbeispiel aber auch (jedoch nicht notwendig) durch einen Vibrator 50, in die Oberfläche der Lehmschicht eingedrückt. Der Vibrator 50 kann auch als drehende Rolle ausgebildet sein, wobei sich hier eine höhere Umdrehungsgeschwindigkeit empfiehlt, die zu einem Einmassieren des Lehmes in die Jute führt. Aufgrund der höheren Umdrehungsgeschwindigkeit rutscht die Walze über das Jute-Material hinweg. Weiterhin erfolgt eine Benetzung.

Das Endprodukt ist eine Lehmbauplatte, die im wesentlichen der Platte gemäß Fig. 2 entspricht, jedoch mit dem Unterschied, daß die mittige Lage an Schilfrohr ebenso ausgebildet ist wie die beiden äußeren Lagen 30. Im Gegensatz zum Ausführungsbeispiel nach Fig. 2 hat also die hergestellte Lehmbauplatte Bereiche, in denen sich das Lehmmaterial durchgehend von der einen zur anderen Oberfläche erstreckt, damit ist die Kapillarität gewährleistet.

Andere Ausführungsformen einer Vorrichtung zum Herstellen von Lehmbauplatten der erfindungsgemäßen Art sind denkbar. Anstelle des Aufbringens eines plastischen (nassen) Lehm-Faser-Gemisches ist es auch möglich, in die Vorratsbehälter oberhalb der Trichter 42 jeweils ein trockenes Lehm-Faser-Gemisch einzufüllen und dies auf den Obertrum 34 schichtweise aufzutragen. Unmittelbar am Ausgang des Trichters oder auch unterhalb dessen befinden sich Sprühdüsen, die Wasser in den Trockenstrom eintragen und im Sinne des Trockenspritzverfahrens von Beton eine so ausreichende Durchmischung von Wasser und Trockenmaterial bewirken, daß letztendlich eine ausreichend plastische Lehmschicht auf dem Obertrum 34 vorliegt.

Das Förderband ist vorzugsweise porös, so daß überflüssiges Wasser unmittelbar nach unter abgeleitet wird, jedenfalls nicht staut. Die Lehmbauplatte kann als verlorene Schalung für Stampflehmwände etc. eingesetzt werden.

Das textile Material ist vorzugsweise aus saugfähigen, also fasrigen Fäden erstellt. Es bietet im Gegesatz zu monofilen Fäden, die jedoch hier nicht ausgeschlossen wird, eine größere Oberfläche für die Haftung des Lehmbreis und damit die Verbindung zwischen textilem Material und Kernschicht.

Als textiles Material kann auch eine mit sehr vielen Löchern versehene Bahn aus Papier bzw. Pappe eingesetzt werden. Hier sichern die Löcher, die mindestens ein Drittel der Oberfläche der Lage ausmachen, daß Lehmbrei hindurchtreten kann, hierdurch wird eine sehr sichere Verbindung erzielt.

Das textile Material ist wesentlich dünner als die Kernschicht, seine Dicke beträgt höchstens 1/10 der Kernschicht, typischerweise liegt die Dicke des textilen Materials zwischen 0,5 und 4 mm.

Die Platten können an zwei angrenzenden Schmalflächen mit Nuten, an den anderen zwei Schmalflächen mit einer Feder ausgestattet sein.

## Patentansprüche

1. Lehmbauplatte bestehend aus einer lehmgebundenen Kernschicht (20) und beidseitig jeweils einer oberflächlichen Lage (22, 24), dadurch gekennzeichnet, daß jede Lage (22, 24) aus einem netzähnlichen, reißfesten, fasrigen, aus natürlich wachsenden Fasern hergestellten, textilen Material besteht, das teilweise in den Lehm der Kernschicht (20) eingebettet ist und bei dem der Durchmesser der Fäden mindestens um den Faktur 5 kleiner ist als der Freiraum zwischen zwei benachbarten Fäden.

2. Lehmbauplatte nach Anspruch 1, dadurch gekennzeichnet, daß sich innerhalb der lehmgebundenen Kernschicht (20) Armierungsfäden aus Naturmaterial und/oder Halme aus Naturmaterial, insbesondere Schilfrohr, befinden.

3. Lehmbauplatte nach Anspruch 1, dadurch gekennzeichnet, daß das textile Material ein grobmaschiges Gewebe ist.

4. Lehmbauplatte nach Anspruch 1, dadurch gekennzeichnet, daß die Öffnungen im netzförmigen Material mindestens zehnmal größer sind als der Durchmesser der Fäden, aus dem das textile Material hergestellt ist.

5. Lehmbauplatte nach Anspruch 1, dadurch gekennzeichnet, daß die Kernschicht Leichtlehm aufweist, insbesondere Strohleichtlehm oder Lehm mit porösen mineralischen Zuschlagstoffen wie beispielsweise Blähton, -glas, -lava, -perlite oder Bims.

6. Lehmbauplatte nach Anspruch 1, dadurch gekennzeichnet, daß zumindest ein Drittel aller Fäden der Lagen (22, 24) vollständig von Lehm umhüllt sind.

7. Lehmbauplatte nach Anspruch 1, gekennzeichnet durch eine innenliegende Isolationsschicht, insbesondere eine zumindest doppelte Lage aus Schilfrohr, die sich zwischen Lehmschichten befindet und eine unmittelbare Verbindung dieser Lehmschichten ausschließt.

8. Lehmbauplatte nach Anspruch 1, dadurch gekennzeichnet, daß sich zumindest bereichsweise zwischen den beiden Oberflächen durchgängig Lehmmaterial befindet, so daß in diesem Bereich die Kapillarität des Lehmmaterials für die Platte gewährleistet ist.

9. Verfahren zur Herstellung einer Lehmbauplatte nach einem der Ansprüche 1 bis 8, dadurch gekennzeichnet, daß eine Lehm als Bindemittel und auch Naturfasern als Armierung aufweisende Kernschicht (20) einer vorgegebenen, gleichbleibenden Dicke hergestellt wird und auf jede der beiden, noch feuchten Oberflächen dieser Kernschicht je eine Lage aus einem netzförmigen, reißfesten, textilen Material aufgelegt und in sie eingedrückt wird.

10. Verfahren nach Anspruch 9, dadurch gekennzeichnet, daß die Herstellung auf einem kontinuierlich laufenden Förderband (32) erfolgt.

11. Verfahren nach Anspruch 10, dadurch gekennzeichnet, daß ein plastisches Lehm-Faser-Gemisch mittels eines Trichters (42) lagenweise auf das Förderband (32) aufgetragen wird.

12. Verfahren nach Anspruch 9, dadurch gekennzeichnet, daß bei Zwischenschritten des Schichtaufbaus und/oder bei der fertigen, noch feuchten Lehmbauplatte durch Vibratoren, Streichwalzen oder dergleiche in eine Verdichtung und Glättung stattfindet.

## Claims

1. Clay building board consisting of a clay-bound core layer (20) with surface layers (22, 24) on both sides, characterized by the fact that each layer (22, 24) consists of a netlike, tear-resistant, fibrous, textile material produced from naturally growing fibers, which textile material is partially embedded in the clay of the core layer (20), and in which the diameter of the threads is smaller than the free space between two neighboring threads by a factor of at least 5.

2. Clay building board in accordance with Claim 1, characterized by the fact that the clay-bound core layer (20) contains reinforcing threads made of natural material and/or stalks of natural material, especially reed.

3. Clay building board in accordance with Claim 1, characterized by the fact that the textile material is a coarse-meshed fabric.

4. Clay building board in accordance with Claim 1, characterized by the fact that the openings in the netlike material are at least ten times larger, than the diameter of the threads of which the textile material is made.

5. Clay building board in accordance with Claim 1, characterized by the fact that the core layer contains light clay, especially straw light clay or clay with porous mineral additives, such as expanded clay, expanded glass, expanded lava, expanded perlite or pumice.

6. Clay building board in accordance with Claim 1, characterized by the fact that at least one third of all threads of the layers (22, 24) are completely surrounded by clay.

7. Clay building board in accordance with Claim 1, characterized by an inner insulation layer, especially an at least double layer of reed, which is located between layers of clay and prevents direct contact between these layers of clay.

8. Clay building board in accordance with Claim 1, characterized by the fact that clay material extends all the way through the board from one surface to the other, at least in some regions of the board, so that in these regions the capillarity of the clay material is guaranteed for the board.

9. Process for producing a clay building board in accordance with any of Claims 1 to 8, characterized by the fact that a core layer (20), which contains clay as a binder, also contains natural fibers as reinforcement and has a predetermined, constant thickness, is produced, and a layer of a netlike, tear-resistant, textile material is applied to and pressed into each of the two, still wet surfaces of this core layer.

10. Process in accordance with Claim 9, characterized by the fact that the production is performed on a continuously running conveyor belt (32).

11. Process in accordance with Claim 10, characterized by the fact that a plastic clay-fiber mixture is applied layer by layer on the conveyor belt (32) by a funnel (42).

12. Process in accordance with Claim 9, characterized by the fact that vibrators, calender rolls or the like are used to compact and smooth the layers during intermediate stages of the layer construction and/or in the finished, still wet clay building board.

## Revendications

1. Panneau de construction en pisé formé d'une couche centrale (20) liée avec argile et d'une couche de surface (22, 24) respectivement des deux côtés, caractérisé en ce que chaque couche de surface (22, 24) est composée d'un matériau textile, réticulé, résistant à la traction, fibreux, fabriqué à partir de fibres poussant naturellement, étant partiellement incorporé dans l'argile de la couche centrale (20) et dont le diamètre des fils est au moins du facteur 5 inférieur à l'espace entre deux fils voisins.

2. Panneau de construction en pisé selon la revendication 1, caractérisé en ce qu'à l'intérieur de la couche centrale (20) liée avec argile se trouvent des fils d'armature en matériau naturel et/ou des tiges en matériau naturel, en particulier des joncs.

3. Panneau de construction en pisé selon la revendication 1, caractérisé en ce que le matériau textile est un tissu à grandes mailles.

4. Panneau de construction en pisé selon la revendication 1, caractérisé en ce que les ouvertures dans le matériau réticulé sont au moins dix fois plus grandes que le diamètre des fils à partir desquels le matériau textile est fabriqué.

5. Panneau de construction en pisé selon la revendication 1, caractérisé en ce que la couche centrale contient de l'argile léger, en particulier du torchis léger ou de l'argile avec des agrégats minéraux poreux tels qu'argile expansée, verre expansé, lave expansée, perlite expansée ou ponce.

6. Panneau de construction en pisé selon la revendication 1, caractérisé en ce qu'au moins un tiers de tous les fils des couches de surface (22, 24) sont entièrement enveloppés d'argile.

7. Panneau de construction en pisé selon la revendication 1, caractérisé en ce qu'une couche isolante intérieure, en particulier une couche au moins double de joncs se trouve entre les couches d'argile et exclue un contact direct de ces couches d'argile.

8. Panneau de construction en pisé selon la revendication 1, caractérisé en ce qu'il y a au moins par zone-sans interruption du matériau argileux entre les deux surfaces pour que dans cette zone la capillarité du matériau argileux pour la plaque soit garantie.

9. Procédé de fabrication d'un panneau de construction en pisé selon l'une des revendications 1 à 8, caractérisé en ce qu'une couche centrale (20), d'une épaisseur donnée et régulière, avec argile en tant que liant et également des fibres naturelles en tant qu'armature, est produite et que, respectivement, sur chacune des deux surfaces encore humides de cette couche centrale, une couche faite d'un matériau textile et réticulée, résistant à la traction, est posée et enfoncée en elle.

10. Procédé selon la revendication 9 caractérisé en ce que la production s'effectue sur une bande transporteuse (32) fonctionnant en continu.

11. Procédé selon la revendication 10 caractérisé en ce qu'un mélange plastique argile-fibre est appliqué par couche sur la bande transporteuse (32) à l'aide d'une trémie (42).

12. Procédé selon la revendication 9 caractérisé en ce que pour les opérations intermédiaires de la fabrication de couches et/ou pour le panneau de construction en pisé fini et encore humide, il y a compactage et lissage par vibrateurs, rouleaux à couchage ou similaires.
